# EUROPEAN PATENT APPLICATION

(11) **EP 3 249 843 A1**
(43) Date of publication of application: **29.11.2017**
(21) Application number: 15878585.7
(22) Date of filing: 21.09.2015
(51) Int. Cl.: H04L 1/18

(54) **DATA PACKET RETRANSMISSION METHOD AND APPARATUS**

(30) Priority: 23.01.2015 CN 201510036061
(71) Applicant: ZTE Corporation, Shenzhen, Guangdong 518057 (CN)
(72) Inventor: XU, Qianqian, Shenzhen Guangdong 518057 (CN)
(74) Representative: Perronace, Andrea
(86) International application number: PCT/CN2015/090186
(87) International publication number: WO 2016/115916

(57) **Abstract**

A method and device for retransmission of a data packet are provided. In the method, a data packet transmitted to User Equipment (UE) is buffered; a transmission feedback made by a Media Access Control (MAC) layer on transmission of the data packet to the UE is received; and when the transmission feedback indicates that the transmission of the data packet to the UE fails, the buffered data packet is resent to the MAC layer for performing transmission scheduling. By means of the solution, a problem in related techniques that transmission modes may not ensure a Packet Error Loss Rate (PER) and a transmission delay of a service at the same time is solved. Compared with an Acknowledged Mode (AM) in related techniques in which whether to perform retransmission is determined based on a feedback result of UE, retransmission determining efficiency is greatly improved in the present solution, and requirements on delay may be satisfied more easily. Compared with an Unacknowledged Mode (UM) in related techniques in which retransmission is not performed, the present solution improves a success rate of transmission and reduces a packet loss rate of the service.

## Description

### Technical Field

The disclosure relates to the communication field, in particular to a method and device for retransmission of a data packet.

### Background

In a current 3rd Generation Partnership Project (3GPP) protocol, services may be divided into different types based on their respective attributes, and each type of service may be indexed and represented by a Quality of service (Qos) Class Identifier (QCI). Each of nine types of QCI services presented in the protocol definitely specifies a Packet Delay Budge (PDB) of the service, which represents the maximum delay of transmission of a data packet between a handheld device (also referred to as User Equipment (UE)) and a core network. It is definitely specified in the protocol that a preset proportion, e.g., 98%, of data packets of any service should satisfy requirements on the delay. Therefore, for ensuring effectiveness of data packets, the PDB may be one of important performance parameters of a base station scheduler.

The protocol also specifies a Packet Error Loss Rate (PER) of each type of QCI service in addition to the delay of the data packet of the service. The PER represents the PER caused by Radio Link Layer (RLL) issues except congestion causes, that is, except congestion causes, an upper limit of the proportion of data packets which have been transmitted by a Radio Link Control (RLC) layer of a transmitting end but have not been successfully received by the RLC layer of a receiving end. For satisfying the PERs of different QCI services, the RLC layer has two modes for data transmission, i.e., an Unacknowledged Mode (UM) and an Acknowledged Mode (AM). In the AM, the RLC layer has a retransmission function for transmitted data; while in the UM, the RLC layer does not have a retransmission function for transmitted data. In the AM with the retransmission function, retransmission may be performed based on a feedback reported by the UE, so the transmission delay of the data packet may increase. For some services having high requirements on delay, for example, voice services (the delay may be suggested to be less than 100ms) and real-time game services (the delay may be suggested to be less than 50ms), the AM may not satisfy the requirements on real-time performance. However, if the UM mode is used, the PER of the service increases because of lacking the retransmission function of the RLC layer. In the current evaluation criteria of the voice services, the PER may be a factor that seriously influences the voice quality. Therefore, it may be concluded that the two transmission modes of the RLC layer may not ensure the PER and the transmission delay of the service at the same time.

An effective solution has not been presented for a problem in related techniques that the transmission modes may not ensure the PER and the transmission delay of the service at the same time.

### Summary

Some exemplary embodiments of the disclosure provide a method and device for retransmission of a data packet, which may at least solve a problem in related techniques that transmission modes may not ensure a PER and a transmission delay of a service at the same time.

According to an exemplary embodiment of the disclosure, a method for retransmission of a data packet is provided, which may include the following acts. A data packet transmitted to UE may be buffered. A transmission feedback made by a Media Access Control (MAC) layer on transmission of the data packet to the UE may be received. When the transmission feedback indicates that the transmission of the data packet to the UE fails, the buffered data packet may be resent to the MAC layer for performing transmission scheduling.

In the exemplary embodiment, before the transmission feedback made by the MAC layer on the transmission of the data packet to the UE is received, the method may further include the following acts. The MAC layer performs the transmission scheduling to the data packet. The MAC layer obtains a scheduling feedback on performing the transmission scheduling to the data packet, and sends the transmission feedback based on the scheduling feedback.

In the exemplary embodiment, the act that the MAC layer obtains the scheduling feedback on performing the transmission scheduling to the data packet, and sends the transmission feedback based on the scheduling feedback may include the following acts. When the MAC layer determines that there is one transmission scheduling corresponding to a scheduling feedback of Acknowledgement (ACK) before the number of times of performing the transmission scheduling to the data packet reaches a preset maximum number of times of transmission, the MAC layer sends the transmission feedback which indicates that the transmission of the data packet to the UE succeeds, or else, sends the transmission feedback which indicates that the transmission of the data packet to the UE fails.

In the exemplary embodiment, the act that the data packet transmitted to the UE is buffered may include an act that the data packet may be buffered in a buffer of an RLC layer.

In the exemplary embodiment, the act that the data packet transmitted to the UE is buffered may include the following acts. The data packet transmitted to the UE is received. It is judged whether the data packet is transmitted to the UE for a first time. When the data packet is transmitted to the UE for the first time, the data packet may be buffered.

In the exemplary embodiment, the act that the data packet transmitted to the UE is buffered may include the following acts. It is judged whether the number of buffered data packets is equal to a preset maximum number of buffered data packets. When the number of buffered data packets is equal to the preset maximum number of buffered data packets, a data packet buffered for longest time or a data packet retransmitted for most number of times may be cleared, and the data packet transmitted to the UE may be buffered.

In the exemplary embodiment, when the number of buffered data packets is not equal to the preset maximum number of buffered data packets, the method may further include an act that the data packet transmitted to the UE may be directly buffered.

In the exemplary embodiment, after the buffered data packet is resent to the MAC layer for performing the transmission scheduling, the method may further include the following act. The number of times of retransmission of the data packet is added with 1. It is judged whether the number of times of retransmission of a buffered data packet is equal to a preset maximum number of times of retransmission. When the number of times of retransmission of the buffered data packet is equal to the preset maximum number of times of retransmission, the buffered data packet may be cleared.

In the exemplary embodiment, when the number of times of retransmission of the buffered data packet is not equal to the preset maximum number of times of retransmission, the method may further include an act that the buffered data packet may be retained.

In the exemplary embodiment, after the transmission feedback made by the MAC layer on the transmission of the data packet to the UE is received, the method may further include the following act. When the transmission feedback indicates that the transmission of the data packet to the UE succeeds, the buffered data packet may be cleared.

According to another exemplary embodiment of the disclosure, a device for retransmission of a data packet is provided, which may include a buffer module, a receiving module and a sending module. The buffer module may be configured to buffer a data packet transmitted to UE. The receiving module may be configured to receive a transmission feedback made by an MAC layer on transmission of the data packet to the UE. The sending module may be configured to, when the transmission feedback indicates that the transmission of the data packet to the UE fails, resend the buffered data packet to the MAC layer for performing the transmission scheduling.

In the exemplary embodiment, the buffer module may be in an RLC layer.

According to some exemplary embodiments of the disclosure, a data packet transmitted to UE is buffered; a transmission feedback made by an MAC layer on transmission of the data packet to the UE is received; and when the transmission feedback indicates that the transmission of the data packet to the UE fails, the buffered data packet is resent to the MAC layer for performing transmission scheduling. In such a manner, a problem in related techniques that transmission modes may not ensure a PER and a transmission delay of a service at the same time may be solved. Compared with an AM in related techniques in which whether to perform retransmission is determined based on a feedback result of UE, retransmission determining efficiency is greatly improved in the present solution, and requirements on delay may be satisfied more easily. Compared with an UM in related techniques in which retransmission is not performed, the present solution improves a success rate of transmission and reduces a packet loss rate of the service.

### Brief Description of the Drawings

The accompanying drawings described here may be used for providing a deeper understanding of the disclosure, and may constitute a part of the application. Schematic embodiments of the disclosure and description thereof may be used for illustrating the disclosure and not intended to form any limit to the disclosure. In the accompanying drawings:
Fig. 1 is a flowchart of a method for retransmission of a data packet according to an exemplary embodiment of the disclosure;
Fig. 2 is a structure diagram of a device for retransmission of a data packet according to an exemplary embodiment of the disclosure;
Fig. 3 is a structure diagram of a scheduler according to an exemplary embodiment of the disclosure; and
Fig. 4 is a flowchart of fast retransmission according to an exemplary embodiment of the disclosure.

### Detailed Description of the Embodiments

The disclosure is elaborated below with reference to the accompanying drawings and exemplary embodiments. Note that, the exemplary embodiments of the disclosure and the characteristics in the exemplary embodiments may be combined under the condition of no conflicts.

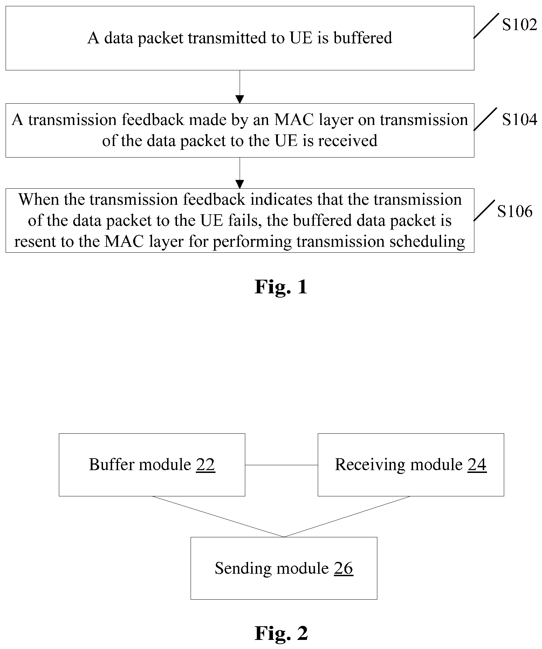

In an exemplary embodiment, a method for retransmission of a data packet is provided. Fig. 1 is a flowchart of the method for retransmission of a data packet according to an exemplary embodiment of the disclosure. As shown in Fig. 1, the method may include the following acts.

At act S102, a data packet transmitted to UE may be buffered.

At act S104, a transmission feedback made by an MAC layer on transmission of the data packet to the UE may be received.

At act S106, when the transmission feedback indicates that the transmission of the data packet to the UE fails, the buffered data packet may be resent to the MAC layer for performing transmission scheduling.

Based on the above acts in the exemplary embodiment, a data packet transmitted to UE may be buffered; a transmission feedback made by an MAC layer on transmission of the data packet to the UE may be received; and when the transmission feedback indicates that the transmission of the data packet to the UE fails, the buffered data packet may be resent to the MAC layer for performing transmission scheduling. By virtue of the solution, whether to perform retransmission may be determined based on the transmission feedback of the MAC layer. A problem in related techniques that transmission modes may not ensure the PER and the transmission delay of the service at the same time may be solved. Compared with an AM in related techniques in which whether to perform retransmission is determined based on a feedback result of UE, retransmission determining efficiency is greatly improved in the present solution, and requirements on delay may be satisfied more easily. Compared with an UM in related techniques in which retransmission may not be performed, the present solution improves a success rate of transmission and reduces a packet loss rate of the service.

In the exemplary embodiment, the transmission feedback sent by the MAC layer may be obtained in the following way. The MAC layer performs the transmission scheduling to the data packet. The MAC layer obtains a scheduling feedback on performing the transmission scheduling to the data packet, and sends the transmission feedback based on the scheduling feedback.

The act that the MAC layer obtains the scheduling feedback on performing the transmission scheduling to the data packet, and sends the transmission feedback based on the scheduling feedback may include the following acts. When the MAC layer determines that there is one transmission scheduling corresponding to a scheduling feedback of ACK before the number of times of performing the transmission scheduling to the data packet reaches a preset maximum number of times of transmission, the MAC layer may send the transmission feedback which indicates that the transmission of the data packet to the UE succeeds, or else (that is, there is no transmission scheduling corresponding to a scheduling feedback of ACK, and all transmission scheduling corresponds to the scheduling feedback of Negative Acknowledgement (NACK) before the number of times of performing the transmission scheduling to the data packet reaches a preset maximum number of times of transmission), the MAC layer may send the transmission feedback which indicates that the transmission of the data packet to the UE fails.

In the exemplary embodiment, the data packet may be buffered in a buffer of an RLC layer.

In the exemplary embodiment, the data packets buffered in act S102 may usually be the data packets transmitted to the UE for a first time. The specific operation mode may be as follows. In the act S102, first a data packet transmitted to the UE may be received; it may be judged whether the data packet is transmitted to the UE for a first time; and when the data packet is transmitted to the UE for the first time, the data packet may be buffered; or else, the data packet may be discarded based on a policy or may be buffered again.

In the exemplary embodiment, a maximum number of buffered data packets transmitted to the UE may be set. When the data packet transmitted to the UE is buffered, it may be judged whether the number of buffered data packets is equal to the preset maximum number of buffered data packets. When the number of buffered data packets is equal to the preset maximum number of buffered data packets, a data packet which is buffered for the longest time may be cleared, or a data packet retransmitted for the most number of times may be cleared, and then the data packet transmitted to the UE may be buffered. When the number of buffered data packets is not equal to the preset maximum number of buffered data packets, the data packet transmitted to the UE may be directly buffered.

In the exemplary embodiment, the maximum number of times of retransmission of the buffered data packet may also be set. After the buffered data packet is resent to the MAC layer for performing the transmission scheduling, 1 may be added to the number of times of retransmission of the data packet. It may be judged whether the number of times of retransmission of a buffered data packet is equal to a preset maximum number of times of retransmission. When the number of times of retransmission of the buffered data packet is equal to the preset maximum number of times of retransmission, the buffered data packet may be cleared. When the number of times of retransmission of the buffered data packet is not equal to the preset maximum number of times of retransmission, the buffered data packet may be retained.

In the exemplary embodiment, when the transmission feedback indicates that the transmission of the data packet to the UE succeeds, the buffered data packet may be cleared.

Corresponding to the method, in an exemplary embodiment, a device for retransmission of a data packet is provided, which may be used for implementing the above exemplary embodiments and exemplary implementation modes. The exemplary embodiments which have been elaborated will not be repeated herein. The term "module" used below may realize a combination of software and/or hardware with an intended function. Although the device described in the following exemplary embodiment may be realized through software better, the realization of the device through hardware or a combination of software and hardware may be possible and conceivable.

Fig. 2 is a structure diagram of the device for retransmission of a data packet according to an exemplary embodiment of the disclosure. As shown in Fig. 2, the device includes: a buffer module 22, a receiving module 24 and a sending module 26. These modules are elaborated below.

The buffer module 22 may be configured to buffer a data packet transmitted to UE. The receiving module 24 may be coupled to the buffer module 22, and may be configured to receive a transmission feedback made by an MAC layer on transmission of the data packet to the UE. The sending module 26 may be coupled to the buffer module 22 and the receiving module 24, and may be configured to, when the transmission feedback indicates that the transmission of the data packet to the UE fails, resend the buffered data packet to the MAC layer for performing transmission scheduling.

The buffer module 22 may be in an RLC layer.

For understanding the above exemplary embodiments better, an elaboration is given below in combination with exemplary embodiments. The following exemplary embodiments may be a combination of the above embodiments and exemplary implementation modes.

In related techniques, there are two transmission modes, namely AM and UM, but the two transmission modes may not ensure the PER and the transmission delay of the service at the same time. Therefore, by taking an RLC layer for example, the exemplary embodiments provide a fast retransmission solution between the AM and the UM. In the solution, the RLC layer performs fast retransmission based on a feedback on scheduling the data packet of the MAC layer, without depending on a feedback reported by the UE, thereby addressing the defect of long retransmission delay in the current transmission mode of the RLC layer, and satisfying requirements on the PDB and the PER of a service data packet.

The method and device for fast retransmission provided in the exemplary embodiments may be applied to a mobile communication network. In the method, a data packet buffer may be determined; based on a scheduling feedback of an MAC layer, the data packet which is transmitted unsuccessfully may be read from the buffer and resent to the MAC layer for performing fast retransmission, without depending on the feedback reported by the UE. The method thereby addresses the defect of long retransmission delay in the current transmission mode of the RLC layer, and satisfies requirements on the PDB and the PER of a service data packet.

In the exemplary embodiments, from the moment when the UE accesses a base station, a data packet scheduled by the UE each time may be put in a buffer. If a scheduling module succeeds in scheduling the data packet, the scheduling module may notify the buffer to clear the data packet. If the scheduling module fails to schedule the data packet, the data packet may be read from the buffer and resent to the scheduling module for scheduling. In this way, fast retransmission may be performed for the data packet by virtue of the buffer.

The scheduling module may define a maximum number of times of transmission for each data packet. Each time when the scheduling module transmits the data packet, the number of times of transmission may be added with 1. If a scheduling feedback received concerning a certain transmission of the data packet is ACK before the maximum number of times of transmission is reached, it may be considered that the data packet is scheduled successfully. If all the scheduling feedbacks received concerning all the transmissions of the data packet are NACK, it may be considered that the data packet is scheduled unsuccessfully.

After the buffer resends the data packet which is scheduled unsuccessfully to the scheduling module, the scheduling module may transmit the data packet all over again starting from the number of times of transmission being 1.

In consideration of a storage space of the buffer, it may be feasible to specify an upper limit of the number of data packets capable of being buffered. If the number of data packets buffered reaches the upper limit, when there is a new data packet needing to be buffered, a data packet buffered for longest time or a data packet retransmitted for most number of times may be cleared.

In consideration of the storage space of the buffer and a scheduling delay of the data packet, it may be feasible to specify the number of times of retransmission of each data packet in the buffer. When the data packet in the buffer is resent to the scheduling module for scheduling, the number of times of retransmission may be added with 1. If the number of times of retransmission reaches the upper limit of the number of times of retransmission, the data packet may be directly cleared from the buffer.

The data packets in the buffer may be maintained separately based on the level of the UE.

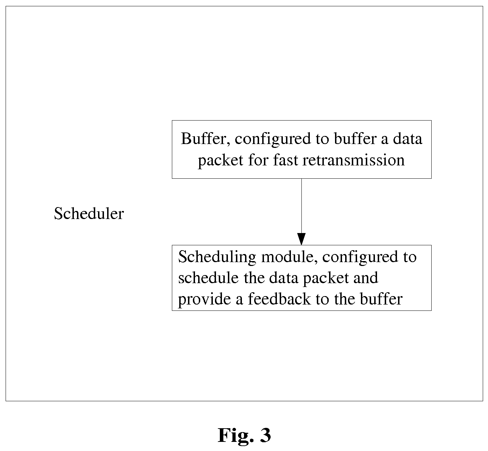

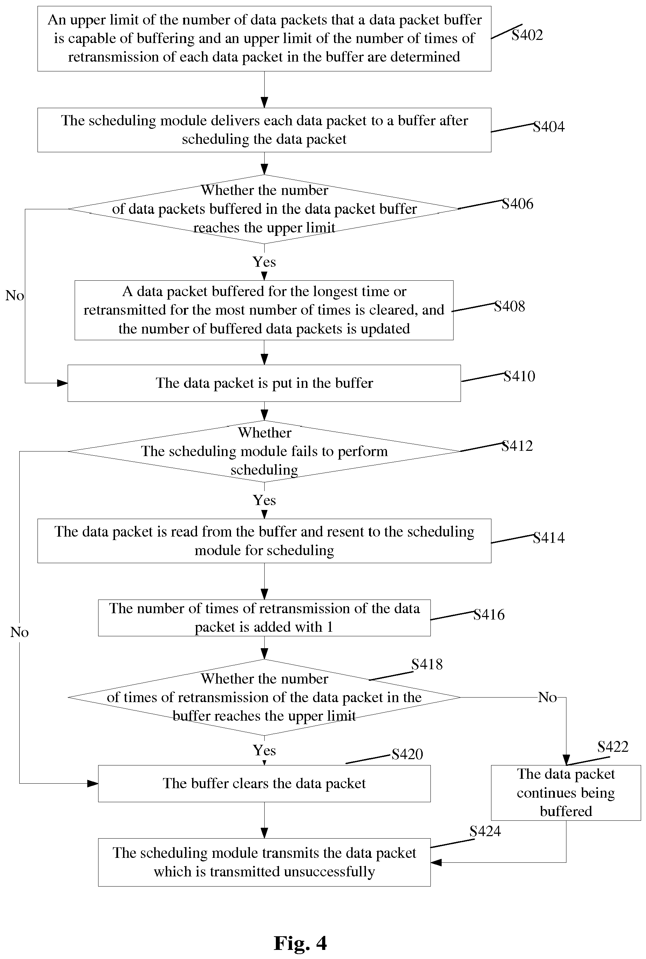

The method and device for fast retransmission which are provided in the exemplary embodiments are elaborated below with reference to Fig. 3 and Fig. 4.

Fig. 3 is a structure diagram of a scheduler according to an exemplary embodiment of the disclosure. As shown in Fig. 3, the scheduler may include a buffer and a scheduling module. The buffer may be in an RLC layer preferably, and may be configured to buffer a data packet to enable fast retransmission. The scheduling module may be in an MAC layer, and may be configured to schedule the data packet and provide a feedback to the buffer.

Fig. 4 is a flowchart of fast retransmission according to an exemplary embodiment of the disclosure, which may be applied to the scheduler shown in Fig. 3. With reference to Fig. 4, the flow of the solution adopted in the exemplary embodiment may include the following acts.

At act S402, an upper limit of the number of data packets that a data packet buffer is capable of buffering and an upper limit of the number of times of retransmission of each data packet in the buffer may be determined.

At act S404, each scheduled data packet may be put in the buffer.

At act S406, it may be judged whether the number of data packets buffered in the data packet buffer reaches the upper limit, if so, enter S408; or else, enter S410.

At act S408, if the number of data packets buffered in the data packet buffer exceeds the upper limit, a data packet buffered for longest time or a data packet retransmitted for most number of times may be cleared, and the number of buffered data packets may be updated.

At act S410, if the number of data packets buffered in the data packet buffer does not exceed the upper limit, the scheduled data packet may be put in the buffer.

At act S412, it may be judged whether the scheduling module succeeds in scheduling; if so, enter S420; or else, enter S414.

At act S414, if the scheduling module fails in scheduling the data packet, the data packet may be read from the buffer and resent to the scheduling module for scheduling.

At act S416, the number of times of retransmission of the data packet may be added with 1.

At act S418, it may be judged whether the number of times of retransmission of the data packet in the buffer reaches the upper limit of the number of times of retransmission; if so, enter S420; or else, enter S422.

At act S420, the data packet buffered in the buffer may be cleared, and the number of buffered data packets may be updated.

At act S422, the data packet may continue being buffered.

At act S424, the scheduling module may reschedule the data packet which is transmitted unsuccessfully based on a scheduling policy.

The exemplary embodiment has the following advantages.

For reducing the retransmission delay of the RLC layer, the exemplary embodiment provides a method and device for fast retransmission, which addresses the defect of long retransmission delay in the current transmission mode of the RLC layer, satisfies requirements on the PDB and the PER of the service data packet, and maximally satisfies a requirement on the Qos attribute of the service.

Some specific exemplary embodiments are given below.

### First exemplary embodiment

At act S502, an upper limit of the number of data packets in the data packet buffer may be determined as infinity, and an upper limit of the number of times of retransmission of each data packet in the buffer may be determined as infinity.

At act S504, UE with UE Index equal to 10 may perform initial access. A data packet Data1 may be scheduled at a moment T1, and may be sent to a buffer.

At act S506, if the upper limit of the number of data packets in the buffer is determined as infinity, the buffer may store the data packet Data1.

At act S508, if the scheduling module succeeds in scheduling the data packet Data1, the scheduling module may notify the buffer to clear the data packet Data1.

At act S510, the data packet Data2 may be scheduled at a moment T2 and sent to the buffer.

At act S512, if the upper limit of the number of data packets in the buffer is determined as infinity, the buffer may store the data packet Data2.

At act S514, if the scheduling module fails to schedule the data packet Data2, the scheduling module may notify the buffer to retransmit the data packet Data2, and enter S516 and S518; if the scheduling module succeeds in scheduling the data packet Data2, the scheduling module may notify the buffer to clear the data packet Data2.

At act S516, the buffer may read the data packet Data2, and the number of times of retransmission of the data packet Data2 may be added with 1, herein the number of times of retransmission may be 1.

At act S518, if the upper limit of the number of times of retransmission of the data packet is determined as infinity, the data packet Data2 may continue being buffered.

At act S520, if the scheduling module schedules a new data packet, S510 to S518 may be repeated.

Note that, if the upper limit of the number of data packets in the data packet buffer is infinity, it may not be needed to update the number of data packets in the buffer after the data packet is deleted.

### Second exemplary embodiment

At act S602, an upper limit of the number of data packets in the data packet buffer may be determined as 5, and an upper limit of the number of times of retransmission of each data packet in the buffer may be determined as 1.

At act S604, UE with UE Index equal to 10 may perform initial access. A data packet Data1 may be scheduled at the moment T1, and may be sent to the buffer.

At act S606, if the upper limit of the number of data packets in the buffer is determined as 5, and the number of data packets that the buffer has stored is 4, the buffer may store the data packet Data1, and the number of data packets that the buffer stores may be added with 1, so that the number of stored data packets is now 5.

At act S608, if the scheduling module fails to schedule the data packet Data1, the scheduling module may notify the buffer to retransmit the data packet Data1.

At act S610, the buffer may read the data packet Data1, and the number of times of retransmission of the data packet Data1 may be added with 1, herein the number of times of retransmission may be 1.

At act S612, if the number of data packets in the buffer is determined as 1, then the number of times of retransmission may be greater than or equal to the upper limit, so the data packet Data1 may be cleared.

At act S614, the number of data packets in the buffer may be updated as 5-1=4.

At act S616, a data packet Data2 may be scheduled at a moment T2 and sent to the buffer.

At act S618, if the upper limit of the number of data packets in the buffer is determined as 5, and the number of data packets that the buffer has stored is 4, the buffer may store the data packet Data2, and number of data packets that the buffer stores may be added with 1, so that the number of stored data packets is now 5.

At act S620, a data packet Data3 may be scheduled at a moment T3 and sent to the buffer.

At act S622, if the upper limit of the number of data packets in the buffer is determined as 5, and the number of data packets that the buffer has stored is 5, the buffer may clear a data packet Datax which is buffered for the longest time, and the buffer may store the data packet Data3.

At act S624, if the scheduling module schedules a new data packet, the above acts may be repeated.

In another exemplary embodiment, software is also provided, which may be configured to perform the solutions described in the above embodiments and exemplary embodiments.

In another exemplary embodiment, a storage medium is also provided, in which the software may be stored. The storage medium may include, but is not limited to, a compact disc, a floppy disc, a hard disc, an erasable memory, and so on.

Obviously, those skilled in the art should appreciate that the above modules and acts of the disclosure may be implemented by a general-purpose computing device, and they may be centralized in a single computing device or distributed on a network composed of multiple computing devices. Alternatively and/or additionally, the above modules and acts of the disclosure may be implemented by a program code which may be capable of being executed by the computing device, so that they may be stored in a storage device and executed by the computing device. In some situations, the presented or described acts may be executed in an order different from that described here; or they may be made into integrated circuit modules, respectively; or multiple modules and acts of them may be made into a single integrated circuit module to realize. In this way, the disclosure may not be limited to any particular combination of hardware and software.

The above is only the exemplary embodiment of the disclosure and not intended to limit the disclosure; for those skilled in the art, the disclosure may have various modifications and changes. Any modifications, equivalent replacements, improvements and the like within the principle of the disclosure shall fall within the scope of protection defined by the appended claims of the disclosure.

### Industrial Applicability

As mentioned above, the method and device for retransmission of a data packet provided in some embodiments of the disclosure have the following beneficial effects. A problem in related techniques that transmission modes may not ensure the PER and the transmission delay of the service at the same time may be solved. Compared with the AM in related techniques in which whether to perform retransmission is determined based on a feedback result of UE, retransmission determining efficiency of the disclosure may be greatly improved, and requirements on delay may be satisfied more easily. Compared with the UM in related techniques in which retransmission is not performed, the disclosure may also improve the success rate of transmission and reduce the packet loss rate of the service.

## Claims

1. A method for retransmission of a data packet, comprising:
buffering a data packet transmitted to User Equipment, UE;
receiving a transmission feedback made by a Media Access Control, MAC, layer on transmission of the data packet to the UE; and
when the transmission feedback indicates that the transmission of the data packet to the UE fails, resending the buffered data packet to the MAC layer for performing transmission scheduling.

2. The method as claimed in claim 1, wherein before receiving the transmission feedback made by the MAC layer on the transmission of the data packet to the UE, the method further comprises:
performing, by the MAC layer, transmission scheduling to the data packet;
obtaining, by the MAC layer, a scheduling feedback on performing the transmission scheduling to the data packet, and sending, by the MAC layer, the transmission feedback based on the scheduling feedback.

3. The method as claimed in claim 2, wherein obtaining, by the MAC layer, the scheduling feedback on performing the transmission scheduling to the data packet, and sending, by the MAC layer, the transmission feedback based on the scheduling feedback comprises:
when the MAC layer determines that there is one transmission scheduling corresponding to a scheduling feedback of Acknowledgement, ACK, before the number of times of performing the transmission scheduling to the data packet reaches a preset maximum number of times of transmission, sending, by the MAC layer, the transmission feedback which indicates that the transmission of the data packet to the UE succeeds, or else, sending the transmission feedback which indicates that the transmission of the data packet to the UE fails.

4. The method as claimed in any one of claims 1 to 3, wherein buffering the data packet transmitted to the UE comprises:
buffering the data packet in a buffer of a Radio Link Control, RLC, layer.

5. The method as claimed in any one of claims 1 to 3, wherein buffering the data packet transmitted to the UE comprises:
receiving the data packet transmitted to the UE;
judging whether the data packet is transmitted to the UE for a first time; and
when the data packet is transmitted to the UE for the first time, buffering the data packet.

6. The method as claimed in any one of claims 1 to 3, wherein buffering the data packet transmitted to the UE comprises:
judging whether the number of buffered data packets is equal to a preset maximum number of buffered data packets; and
when the number of buffered data packets is equal to the preset maximum number of buffered data packets, clearing a data packet buffered for longest time or a data packet retransmitted for most number of times, and buffering the data packet transmitted to the UE.

7. The method as claimed in claim 6, wherein when the number of buffered data packets is not equal to the preset maximum number of buffered data packets, the method further comprises:
directly buffering the data packet transmitted to the UE.

8. The method as claimed in any one of claims 1 to 3, wherein after resending the buffered data packet to the MAC layer for performing the transmission scheduling, the method further comprises:
adding 1 to the number of times of retransmission of the data packet;
judging whether the number of times of retransmission of a buffered data packet is equal to a preset maximum number of times of retransmission; and
when the number of times of retransmission of the buffered data packet is equal to the preset maximum number of times of retransmission, clearing the buffered data packet.

9. The method as claimed in claim 8, wherein when the number of times of retransmission of the buffered data packet is not equal to the preset maximum number of times of retransmission, the method further comprises:
retaining the buffered data packet.

10. The method as claimed in any one of claims 1 to 3, wherein after receiving the transmission feedback made by the MAC layer on the transmission of the data packet to the UE, the method further comprises:
when the transmission feedback indicates that the transmission of the data packet to the UE succeeds, clearing the buffered data packet.

11. A device for retransmission of a data packet, comprising:
a buffer module, which is configured to buffer a data packet transmitted to User Equipment, UE;
a receiving module, which is configured to receive a transmission feedback made by a Media Access Control, MAC, layer on transmission of the data packet to the UE; and
a sending module, which is configured to, when the transmission feedback indicates that the transmission of the data packet to the UE fails, resend the buffered data packet to the MAC layer for performing transmission scheduling.

12. The device as claimed in claim 11, wherein the buffer module is in a Radio Link Control, RLC, layer.
